# EUROPÄISCHE PATENTSCHRIFT

(11) **EP 4 307 876 B1**
(45) Veröffentlichungstag und Bekanntmachung des Hinweises auf die Patenterteilung: **18.02.2026**
(21) Anmeldenummer: 22711035.0
(22) Anmeldetag: 08.03.2022
(51) Int. Cl.: A01C 17/00, A01C 15/12

(54) **VERFAHREN ZUM STEUERN EINER LANDWIRTSCHAFTLICHEN STREUMASCHINE UND ENTSPRECHENDES STREUSYSTEM**
METHOD FOR CONTROLLING AN AGRICULTURAL SPREADING MACHINE AND CORRESPONDING SPREADING SYSTEM
PROCÉDÉ DE COMMANDE D'UNE MACHINE D'ÉPANDAGE AGRICOLE ET SYSTÈME D'ÉPANDAGE CORRESPONDANT

(30) Priorität: 18.03.2021 DE 102021106602
(43) Veröffentlichungstag der Anmeldung: 24.01.2024
(73) Patentinhaber: Amazonen-Werke H. Dreyer SE & Co. KG, 49205 Hasbergen (DE)
(72) Erfinder: BÄUMKER, Herbert, 49176 Hilter (DE)
(86) Internationale Anmeldenummer: PCT/EP2022/055783
(87) Internationale Veröffentlichungsnummer: WO 2022/194601

(56) Entgegenhaltungen:
- EP-A1- 2 792 228
- US-A1- 2017 274 397

## Beschreibung

Die Erfindung betrifft ein Verfahren zum Steuern einer landwirtschaftlichen Streumaschine nach dem Oberbegriff des Patentanspruchs 1 und ein Streusystem zum Ausbringen von Streugut nach dem Oberbegriff des Patentanspruchs 11.

Zum Ausbringen von Streugut auf große landwirtschaftliche Flächen werden regelmäßig gezogene Streumaschinen eingesetzt, welche durch einen großvolumigen Vorratstank eine vergleichsweise große Menge an Streugut mitführen können. Derartige Streumaschinen weisen zum Fördern des Streuguts häufig ein Förderband auf, mittels welchem das Streugut in Richtung der Streuscheiben transportiert und in einer Abwurfebene von dem Förderband in Richtung der Streuscheiben abgeworfen wird.

Zur Mengeneinstellung des auf die Streuscheiben aufgegebenen Streuguts werden in der Praxis Schiebersysteme eingesetzt, mit welchen der freie Förderquerschnitt oberhalb des Förderbandes eingestellt werden kann. Derartige Schiebersysteme weisen einen Hauptschieber auf, mit welchem eine Mengenvoreinstellung erfolgen kann. In Förderrichtung hinter dem Hauptschieber und im Nahbereich der Abwurfebene des Förderbandes können zwei hydraulisch betätigbare Schließschieber angeordnet sein, über welche die Aufgabe des Streuguts auf die Streuscheiben scheibenindividuell unterbunden werden kann.

Die bekannten Lösungen zur Mengeneinstellung an Streumaschinen, bei welchen zum Fördern des Streuguts ein Förderband eingesetzt wird, bringen insbesondere zwei Nachteile mit sich. Beim Keilstreuen wird zunächst einer der beiden Schließschieber geschlossen, sodass sich das Streugut aufgrund des weiterlaufenden Förderbandes vor dem geschlossenen Schließschieber sammelt. Beim darauffolgenden Öffnen des Schließschiebers, beispielsweise in der nächsten Fahrgasse, wird aufgrund der Anstauung des Streuguts vor dem Schließschieber und der Fließfähigkeit des Streuguts eine zu große Menge des Streuguts auf die Streuscheibe aufgegeben, sodass es zu einer lokalen Fehlausbringung kommt. Insbesondere beim Ausbringen von Streugut auf vergleichsweise langen keilförmigen Flächenabschnitten kann es sogar zu einem Überlauf des Streuguts über den Schließschieber bzw. dessen obere Begrenzungskante kommen, wodurch Streugut unkontrolliert auf die Streuscheiben und/oder die Nutzfläche gelangt. Die Verhinderung eines solchen Überlaufs ist aufgrund von konstruktionsbedingten Vorgaben äußerst aufwendig, da dann eine vorgelagerte Mengeneinstellung nicht mehr umsetzbar ist.

Aus der Druckschrift EP 1 869 962 B1 ist ein ohne Hauptschieber arbeitendes Mengendosiersystem bekannt. Bei der dort beschriebenen Streugutausbringung liegt beim temporären Unterbrechen der Streugutausbringung durch Stoppen des Förderbandes jedoch zumindest auf einer Teilbreite des Förderbandes Streugut in unmittelbarer Nähe der Abwurfebene. Bei der Fortsetzung der Bandförderung wird dann zwangsläufig direkt auf dieser Seite Streugut auf die Streuscheibe aufgegeben, unabhängig davon, ob dies beabsichtigt ist oder nicht. Aus diesem Grund lässt sich eine unbeabsichtigte Streugutausbringung auf der kurveninneren Seite am Ende eines Wendevorgangs im Vorgewende nicht vermeiden, sodass es bei jedem Wendevorgang zwischen zwei Parallelfahrten im kurveninneren Bereich zu einer Überdüngung kommt. Dadurch, dass beim temporären Unterbrechen der Streugutausbringung Streugut in unmittelbarer Nähe der Abwurfebene liegt, besteht außerdem die Gefahr, dass bei holpriger Fahrt, beispielsweise aufgrund eines unebenen Bodens, Streugut unkontrolliert auf die Streuscheibe und/oder die Nutzfläche fällt.

Aus der EP 2 792 228 A1 ist eine Streuvorrichtung bekannt, die eine Streueinheit mit einer Verteilerscheibe umfasst, wobei die Streuvorrichtung einen Aufbau umfasst, der eine Selbstzentrierung der Streueinheit sicherstellt. Dabei ist Streugut aus einem Vorratsbehälter mittels einer Fördereinrichtung der Streueinheit zuführbar. Zudem wird eine Steuer- und/oder Regelungseinrichtung offenbart, die den mittels der Fördereinrichtung geförderten Massenstrom an Streugut in Abhängigkeit wenigstens eines Streuparameters aus der Gruppe Streumenge pro Fläche, Arbeitsbreite und Fahrgeschwindigkeit steuert und/oder regelt.

Die US 2017/274397 A1 offenbart eine Streuvorrichtung mit einem Materialverteiler, der von einer Seite zur anderen verstellbar ist, um die Aufteilung des Materialstroms, der über Bereiche des Materialverteilers fließt und aufgeteilt wird, einzustellen. Der Materialverteiler trägt und bewegt sich in Längsrichtung mit einer Streueinheit. Die Geometrie der Streumuster kann durch seitliches Verstellen der Position des Materialverteilers eingestellt werden.

Um den zuvor beschriebenen Problemen zu begegnen, werden in der Praxis auch Streumaschinen eingesetzt, welche anstatt von Streuscheiben ein Verteilergestänge mit einer Mehrzahl von Verteilelementen aufweisen, wobei die Streugutförderung bei diesen Maschinen pneumatisch erfolgt. Eine derartige Streumaschine ist beispielsweise aus der Druckschrift EP 3 662 734 A1 bekannt.

Die der Erfindung zugrundeliegende Aufgabe besteht somit darin, die zuvor genannten Nachteile beim Ausbringen von Streugut mit einer landwirtschaftlichen Streumaschine, bei welcher zur Streugutförderung ein Förderband eingesetzt wird, zumindest teilweise zu überwinden.

Die Aufgabe wird gelöst durch ein Verfahren der eingangs genannten Art, wobei eine Steuerungseinrichtung im Rahmen des erfindungsgemäßen Verfahrens zum temporären Unterbrechen der Streugutausbringung an einem Abschaltort auf der landwirtschaftlichen Nutzfläche die Fördermengeneinstelleinrichtung dazu veranlasst, frühzeitig vor Erreichen des Abschaltorts das Fördern von Streugut in die Leerlaufstrecke hinein zu verhindern, sodass die Leerlaufstrecke des Förderbandes beim Erreichen des Abschaltortes leer gelaufen ist,
wobei die Steuerungseinrichtung zu einem berechneten Schließzeitpunkt das Fördern von Streugut in die Leerlaufstrecke hinein verhindert, wobei die Steuerungseinrichtung zur Berechnung des Schließzeitpunkts eine aktuelle Position und/oder eine Position des Abschaltortes berücksichtigt, und wobei zur Positionsbestimmung ein Satellitennavigationssystem eingesetzt wird.

Nach der temporären Unterbrechung der Streugutausbringung liegt somit kein Streugut im Nahbereich der Abwurfebene, da die Leerlaufstrecke bereits leer gelaufen ist. Hierdurch besteht nicht die Gefahr, dass bei holpriger Fahrt Streugut unbeabsichtigt auf die Streuscheibe fällt. Ferner liegt bei Fortsetzung der Streugutausbringung kein Streugut im Nahbereich der Abwurfebene. Es liegt somit bei Fortsetzung der Streugutausbringung nach oder während eines Wendevorgangs niemals Streugut auf der falschen Seite der Leerlaufstrecke, sodass keine unbeabsichtigte lokale übermäßige oder zu geringe Ausbringung von Streugut erfolgt. Wenn es sich bei dem Streugut um Dünger handelt, wird eine Überdüngung bzw. Unterdüngung beim Ausführen von Wendevorgängen, beispielsweise im Vorgewende, effektiv vermieden. So kann auch das Risiko des Streuens in Gefahrenbereich, beispielsweise an einer Feldgrenze oder an einem Gewässer, erheblich verringert werden.

Die Steuerungseinrichtung kann Bestandteil der Streumaschine sein. Alternativ kann die Steuerungseinrichtung eine maschinenexterne Einrichtung sein. Die Steuerungseinrichtung kann beispielsweise ein Terminal, insbesondere ein Isobus-Terminal, sein, welches signalleitend mit der Streumaschine verbunden ist. Das temporäre Unterbrechen der Streugutausbringung erfolgt beispielsweise im Übergang zum Vorgewende oder am Ende eines Keilstreuvorgangs. Das Streugut wird mittels des Förderbandes aus einem Vorratsbehälter in Richtung der Streuscheiben gefördert. Das Förderband ist vorzugsweise umlaufend ausgebildet. Das Förderband weist vorzugsweise einen Bandantrieb auf. Die Streuscheiben sind vorzugsweise nebeneinander angeordnet. Der Betrieb des Förderbandes und der Fördermengeneinstelleinrichtung wird vorzugsweise mittels der Steuerungseinrichtung gesteuert.

In einer bevorzugten Ausführungsform des erfindungsgemäßen Verfahrens veranlasst die Steuerungseinrichtung zum Fortsetzen der Streugutausbringung an einem Einschaltort auf der landwirtschaftlichen Nutzfläche die Fördermengeneinstelleinrichtung dazu, frühzeitig vor Erreichen des Einschaltorts das Fördern von Streugut in die Leerlaufstrecke hinein auszulösen, sodass das Förderband bei Erreichen des Einschaltorts entlang der gesamten Leerlaufstrecke zumindest auf einer Teilbreite mit Streugut beladen ist. Bei Erreichen des Einschaltorts liegt somit zumindest auf einer Teilbreite der Leerlaufstrecke Streugut bis zur Abwurfebene, sodass die Streugutaufgabe auf die Streuscheiben bei Passieren des Einschaltortes unmittelbar ohne Verzögerung erfolgen kann.

In einer weiteren bevorzugten Ausführungsform des erfindungsgemäßen Verfahrens wird das die Leerlaufstrecke verlassende und sich auf einer ersten Leerlaufstreckenteilbreite befindende Streugut in der Abwurfebene in Richtung einer ersten Streuscheibe der Streumaschine von dem Förderband abgeworfen. Alternativ oder zusätzlich wird das die Leerlaufstrecke verlassende und sich auf einer zweiten Leerlaufstreckenteilbreite befindende Streugut in der Abwurfebene in Richtung einer zweiten Streuscheibe der Streumaschine von dem Förderband abgeworfen. Die erste Leerlaufstreckenteilbreite ist also einer ersten Streuscheibe zugeordnet, wobei die zweite Leerlaufstreckenteilbreite einer zweiten Streuscheibe zugeordnet ist. Insofern kann die Streugutaufgabe auf die erste Streuscheibe über die Beladung der ersten Leerlaufstreckenteilbreite eingestellt werden, wobei die Streugutaufgabe auf die zweite Streuscheibe über die Beladung der zweiten Leerlaufstreckenteilbreite einstellbar ist.

In einer Weiterbildung des erfindungsgemäßen Verfahrens stellt die Fördermengeneinstelleinrichtung in der Mengeneinstellebene mittels eines ersten Fördermengenbegrenzers die in eine erste Leerlaufstreckenteilbreite einlaufende Fördermenge an Streugut ein. Alternativ oder zusätzlich stellt die Fördermengeneinstelleinrichtung in der Mengeneinstellebene mittels eines zweiten Fördermengenbegrenzers die in eine zweite Leerlaufstreckenteilbreite einlaufende Fördermenge an Streugut ein. Die Leerlaufstreckenteilbreiten sind Teilbreiten der Leerlaufstrecke, beispielsweise ist die erste Leerlaufstreckenteilbreite die linke Seite und die zweite Leerlaufstreckenteilbreite die rechte Seite der Leerlaufstrecke. Die Fördermengenbegrenzer umfassen vorzugsweise jeweils einen Mengenschieber, welcher auf das Förderband heruntergefahren und von dem Förderband abgehoben werden kann. Die Fördermengeneinstelleinrichtung kann also eine Doppelschiebervorrichtung sein. Die Mengenschieber sind vorzugsweise jeweils mit einem Schieberantrieb verbunden, über welchen der jeweilige Mengenschieber angehoben und abgesenkt werden kann. Die Schieberantriebe können vorzugsweise unabhängig voneinander angesteuert werden. Die Schieberantriebe können elektrische Antriebe sein. Alternativ können die Schieberantriebe auch pneumatische oder hydraulische Antriebe sein. Mittels der Schieberantriebe lässt sich vorzugsweise der freie Förderquerschnitt oberhalb des Förderbandes im Einlaufbereich der ersten Leerlaufstreckenteilbreite und im Einlaufbereich der zweiten Leerlaufstreckenteilbreite einstellen.

Es ist darüber hinaus ein Verfahren vorteilhaft, bei welchem die Steuerungseinrichtung an einer rechtwinklig zur Fahrtrichtung der Streumaschine verlaufenden Streugrenze der landwirtschaftlichen Nutzfläche beim temporären Unterbrechen der Streugutausbringung an einem Abschaltort auf der landwirtschaftlichen Nutzfläche den ersten Fördermengenbegrenzer und den zweiten Fördermengenbegrenzer der Fördermengeneinstelleinrichtung zu einem gemeinsamen Schließzeitpunkt gleichzeitig dazu veranlasst, frühzeitig vor Erreichen des Abschaltorts das Fördern von Streugut in die erste Leerlaufstreckenteilbreite und die zweite Leerlaufstreckenteilbreite hinein zu verhindern, sodass die erste Leerlaufstreckenteilbreite und die zweite Leerlaufstreckenteilbreite vor dem Erreichen des Abschaltorts synchron leerlaufen. Eine rechtwinklig zur Fahrtrichtung der Streumaschine verlaufende Streugrenze ergibt sich insbesondere in den Übergangsbereichen zum Vorgewende, in welchen die Vorgewendefahrgasse rechtwinklig zu den feldinneren Fahrgassen verläuft. Dadurch, dass die erste Leerlaufstreckenteilbreite und die zweite Leerlaufstreckenteilbreite vor dem Erreichen des Abschaltorts synchron leerlaufen, wird die Streugutausbringung beidseitig synchron unterbrochen.

In einer weiteren bevorzugten Ausführungsform des erfindungsgemäßen Verfahrens veranlasst die Steuerungseinrichtung an einer schräg zur Fahrtrichtung der Streumaschine verlaufenden Streugrenze der landwirtschaftlichen Nutzfläche beim temporären Unterbrechen der Streugutausbringung an einem Abschaltort auf der landwirtschaftlichen Nutzfläche den ersten Fördermengenbegrenzer der Fördermengeneinstelleinrichtung zu einem ersten Schließzeitpunkt und den zweiten Fördermengenbegrenzer der Fördermengeneinstelleinrichtung zu einem zweiten Schließzeitpunkt zeitversetzt voneinander dazu, frühzeitig vor Erreichen des Abschaltorts das Fördern von Streugut in die erste Leerlaufstreckenteilbreite und die zweite Leerlaufstreckenteilbreite hinein zu verhindern, sodass die erste Leerlaufstreckenteilbreite und die zweite Leerlaufstreckenteilbreite vor dem Erreichen des Abschaltorts asynchron leerlaufen. Durch das asynchrone Leerlaufen der ersten Leerlaufstreckenteilbreite und der zweiten Leerlaufstreckenteilbreite wird die Streugutausbringung zunächst einseitig unterbrochen, bevor es zur Gesamtunterbrechung der Streugutausbringung kommt. Bei einer schräg zur Fahrtrichtung der Streumaschine verlaufenden Streugrenze liegt beispielsweise eine Keilstreusituation oder ein schräg verlaufendes Vorgewende vor.

In einer Weiterbildung des erfindungsgemäßen Verfahrens berechnet die Steuerungseinrichtung den gemeinsamen Schließzeitpunkt bei einer rechtwinklig zur Fahrtrichtung der Streumaschine verlaufenden Streugrenze der landwirtschaftlichen Nutzfläche in Abhängigkeit einer beabsichtigten Fahrgeschwindigkeit bis zum Erreichen des Abschaltortes. Alternativ oder zusätzlich berechnet die Steuerungseinrichtung den ersten Schließzeitpunkt und/oder den zweiten Schließzeitpunkt bei einer schräg zur Fahrtrichtung der Streumaschine verlaufenden Streugrenze der landwirtschaftlichen Nutzfläche in Abhängigkeit einer beabsichtigten Fahrgeschwindigkeit bis zum Erreichen des Abschaltortes. Die erfindungsgemäße Steuerungseinrichtung berücksichtigt bei der Berechnung des Schließzeitpunkts auch die aktuelle Position und/oder die Position des Abschaltortes, insbesondere den Abstand zum Abschaltort. Ferner kann die Steuerungseinrichtung bei der Berechnung des Schließzeitpunkts auch die Dauer bis zum Erreichen des Abschaltortes berücksichtigen, welche sich aus der Entfernung zum Abschaltort und der Fahrgeschwindigkeit bis zum Abschaltort ergibt. Zur Positionsermittlung wird ein Satellitennavigationssystem eingesetzt, beispielsweise GPS oder DGPS.

Die Steuerungseinrichtung kann den gemeinsamen Schließzeitpunkt bzw. den ersten Schließzeitpunkt und/oder den zweiten Schließzeitpunkt alternativ oder zusätzlich auch unter Berücksichtigung der tatsächlichen oder aktuellen Fahrgeschwindigkeit oder unter Berücksichtigung einer ausgewählten Fahrgeschwindigkeit berechnen.

In einer weiteren bevorzugten Ausführungsform des erfindungsgemäßen Verfahrens führen der erste Fördermengenbegrenzer und der zweite Fördermengenbegrenzer der Fördermengeneinstelleinrichtung zum vollständigen Verhindern des Hineinförderns von Streugut in die erste Leerlaufstreckenteilbreite und die zweite Leerlaufstreckenteilbreite jeweils einen Schließvorgang aus, welcher sich zeitlich über eine Schließdauer erstreckt. Die in die erste Leerlaufstreckenteilbreite einlaufende Fördermenge an Streugut fällt aufgrund des Schließvorgangs des ersten Fördermengenbegrenzers während der Schließdauer des ersten Fördermengenbegrenzers ab. Alternativ oder zusätzlich fällt die in die zweite Leerlaufstreckenteilbreite einlaufende Fördermenge an Streugut aufgrund des Schließvorgangs des zweiten Fördermengenbegrenzers während der Schließdauer des zweiten Fördermengenbegrenzers ab. Während der Schließdauer kommt es zu einer zunehmenden Sperrung des freien Förderquerschnitts im Einlaufbereich der Leerlaufstreckenteilbreiten durch den jeweiligen Fördermengenbegrenzer, sodass während des Schließvorgangs auf den Leerlaufstreckenteilbreiten eine Beladungsrampe entsteht. Beim Schließvorgang fällt die Beladungsrampe entgegen der Förderrichtung ab. Öffnungsvorgänge des ersten Fördermengenbegrenzers und des zweiten Fördermengenbegrenzers erstrecken sich ebenfalls zeitlich über eine Öffnungsdauer, wobei sich während des Öffnungsvorgangs ebenfalls eine Beladungsrampe auf den Leerlaufstreckenteilbreiten ergibt. Während des Öffnungsvorgangs fällt die Beladungsrampe jedoch in Förderrichtung ab.

In einer anderen bevorzugten Ausführungsform des erfindungsgemäßen Verfahrens passt die Steuerungseinrichtung die Bandgeschwindigkeit des Förderbandes während des Schließvorgangs des ersten und/oder des zweiten Fördermengenbegrenzers an die abfallende Fördermenge an Streugut auf der ersten Leerlaufstreckenteilbreite und/oder der zweiten Leerlaufstreckenteilbreite an. Vorzugsweise steigt die Bandgeschwindigkeit mit abfallender Fördermenge an Streugut auf der ersten Leerlaufstreckenteilbreite und/oder der zweiten Leerlaufstreckenteilbreite an. Die Steuerungseinrichtung berücksichtigt bei der Anpassung der Bandgeschwindigkeit des Förderbandes vorzugsweise auch das zu erzeugende Streubild, die Fahrgeschwindigkeit und/oder die Schließgeschwindigkeit des ersten und/oder des zweiten Fördermengenbegrenzers.

Darüber hinaus ist ein erfindungsgemäßes Verfahren vorteilhaft, bei welchem die Fördermengeneinstelleinrichtung die in die Leerlaufstrecke einlaufende Fördermenge an Streugut durch teilweises oder vollständiges Sperren des freien Förderquerschnitts oberhalb des Förderbandes einstellt. Die Einstellung des freien Förderquerschnitts oberhalb des Förderbandes erfolgt vorzugsweise durch ein Absenken und Anheben von Mengenschiebern der Fördermengenbegrenzer. Die der Erfindung zugrundeliegende Aufgabe wird ferner durch ein Streusystem der eingangs genannten Art gelöst, wobei das erfindungsgemäße Streusystem eine Steuerungseinrichtung aufweist, welche dazu eingerichtet ist, zum temporären Unterbrechen der Streugutausbringung an einem Abschaltort auf der landwirtschaftlichen Nutzfläche die Fördermengeneinstelleinrichtung dazu zu veranlassen, frühzeitig vor Erreichen des Abschaltorts das Fördern von Streugut in die Leerlaufstrecke hinein zu verhindern, sodass die Leerlaufstrecke des Förderbandes bei Erreichen des Abschaltorts leergelaufen ist, wobei die Steuerungseinrichtung ferner dazu eingerichtet ist, zu einem berechneten Schließzeitpunkt das Fördern von Streugut in die Leerlaufstrecke hinein zu verhindern und zur Berechnung des Schließzeitpunkts eine aktuelle Position und/oder eine Position des Abschaltortes zu berücksichtigen, wobei zur Positionsbestimmung ein Satellitennavigationssystem eingesetzt wird.

In einer bevorzugten Ausführungsform ist das erfindungsgemäße Streusystem dazu eingerichtet, das Verfahren zum Steuern einer landwirtschaftlichen Streumaschine während des Ausbringens von Streugut auf eine landwirtschaftliche Nutzfläche nach einer der vorstehend beschriebenen Ausführungsformen auszuführen. Hinsichtlich der Vorteile und Modifikationen des erfindungsgemäßen Streusystems wird somit auf die Vorteile und Modifikationen des erfindungsgemäßen Verfahrens verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Streusystems in einer perspektivischen Darstellung;
- Fig. 2: ein weiteres Ausführungsbeispiel des erfindungsgemäßen Streusystems in einer Draufsicht;
- Fig. 3: eine landwirtschaftliche Streumaschine während des Ausbringens von Streugut, wobei die landwirtschaftliche Streumaschine durch das erfindungsgemäße Verfahren gesteuert wird;
- Fig. 4: eine landwirtschaftliche Streumaschine während des Ausbringens von Streugut, wobei die landwirtschaftliche Streumaschine durch das erfindungsgemäße Verfahren gesteuert wird;
- Fig. 5: einen Streugutbeladungszustand einer Teilbreite der Leerlaufstrecke samt Fördermengenbegrenzer während des Ausbringens von Streugut;
- Fig. 6: einen weiteren Streugutbeladungszustand einer Teilbreite der Leerlaufstrecke samt Fördermengenbegrenzer während des Ausbringens von Streugut;
- Fig. 7: einen weiteren Streugutbeladungszustand einer Teilbreite der Leerlaufstrecke samt Fördermengenbegrenzer während des Ausbringens von Streugut;
- Fig. 8: einen weiteren Streugutbeladungszustand einer Teilbreite der Leerlaufstrecke samt Fördermengenbegrenzer während des Ausbringens von Streugut; und
- Fig. 9: einen weiteren Streugutbeladungszustand einer Teilbreite der Leerlaufstrecke samt Fördermengenbegrenzer während des Ausbringens von Streugut.

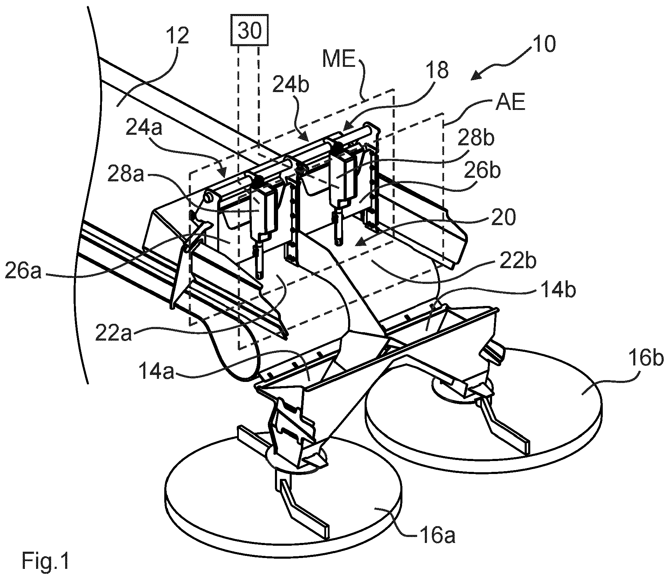

Die Fig. 1 zeigt ein Streusystem 10 zum Ausbringen von Streugut S auf eine landwirtschaftliche Nutzfläche. Das Streusystem 10 kann beispielsweise Bestandteil einer landwirtschaftlichen Streumaschine sein, wobei die landwirtschaftliche Streumaschine beispielsweise ein Zweischeiben-Düngerstreuer ist.

Das Streusystem 10 umfasst ein Förderband 12, mittels welchem Streugut aus einem Vorratsbehälter zu einer ersten Streuscheibe 16a und einer zweiten Streuscheibe 16b transportiert werden kann. Das Förderband 12 fördert das auszubringende Streugut S entlang einer sich auf einen Längsabschnitt LA des Förderbandes 12 beziehenden Leerlaufstrecke 20, welche zwischen einer Mengeneinstellebene ME und einer Abwurfebene AE liegt. Die die Leerlaufstrecke 20 verlassende Fördermenge an Streugut S wird in der Abwurfebene AE in Richtung der Streuscheiben 16a, 16b abgeworfen. Zwischen dem Förderband 12 und den Streuscheiben 16a, 16b sind Führungskörper 14a, 14b angeordnet, welche als Trichter ausgebildet sind und das das Förderband 12 verlassende Streugut S vor dem Auftreffen auf die Streuscheiben 16a, 16b zusammenführen.

Das Streusystem 10 weist ferner eine Fördermengeneinstelleinrichtung 18 auf, über welche in der Mengeneinstellebene ME die in die Leerlaufstrecke 20 einlaufende Fördermenge an Streugut S eingestellt werden kann.

Die Leerlaufstrecke 20 ist unterteilt in eine erste Leerlaufstreckenteilbreite 22a und eine zweite Leerlaufstreckenteilbreite 22b. Das die Leerlaufstrecke 20 verlassende und sich auf der ersten Leerlaufstreckenteilbreite 22a befindende Streugut S wird in der Abwurfebene AE in Richtung der ersten Streuscheibe 16a von dem Förderband 12 abgeworfen. Das die Leerlaufstrecke 20 verlassende und sich auf der zweiten Leerlaufstreckenteilbreite 22b befindende Streugut S wird in der Abwurfebene AE in Richtung der zweiten Streuscheibe 16b von dem Förderband 12 abgeworfen.

Die Fördermengeneinstelleinrichtung 18 weist einen in der Mengeneinstellebene ME eingeordneten ersten Fördermengenbegrenzer 24a auf. Mittels des ersten Fördermengenbegrenzers 24a kann die in die erste Leerlaufstreckenteilbreite 22a einlaufende Fördermenge an Streugut S eingestellt werden. Die Fördermengeneinstelleinrichtung 18 weist in der Mengeneinstellebene ME ferner einen zweiten Fördermengenbegrenzer 24b auf, mittels welchem die in die zweite Leerlaufstreckenteilbreite 22b einlaufende Fördermenge an Streugut S eingestellt werden kann.

Die Fördermengenbegrenzer 24a, 24b umfassen jeweils einen Mengenschieber 26a, 26b, welche auf das Förderband 12 heruntergefahren und von dem Förderband 12 angehoben werden können. Die Mengenschieber 26a, 26b sind jeweils mit einem Schieberantrieb 28a, 28b verbunden, über welchen der jeweilige Mengenschieber 26a, 26b angehoben und abgesenkt werden kann. Die Schieberantriebe 28a, 28b sind elektrische Antriebe.

Die Schieberantriebe 28a, 28b sowie der Bandantrieb des Förderbandes 12 sind signalleitend mit einer Steuerungseinrichtung 30 des Streusystems 10 verbunden. Die Steuerungseinrichtung 30 kann eine maschineninterne oder eine maschinenexterne Steuerungseinrichtung sein. Beispielsweise ist die Steuerungseinrichtung 30 ein Terminal, insbesondere ein Isobus-Terminal.

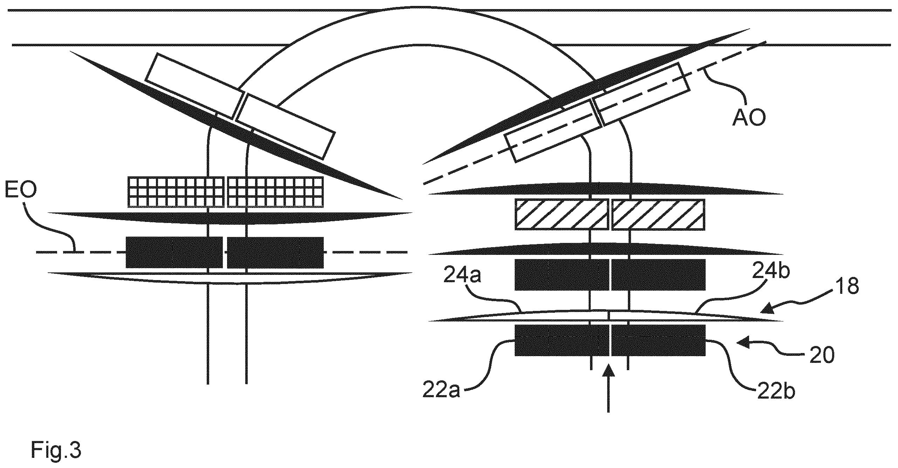

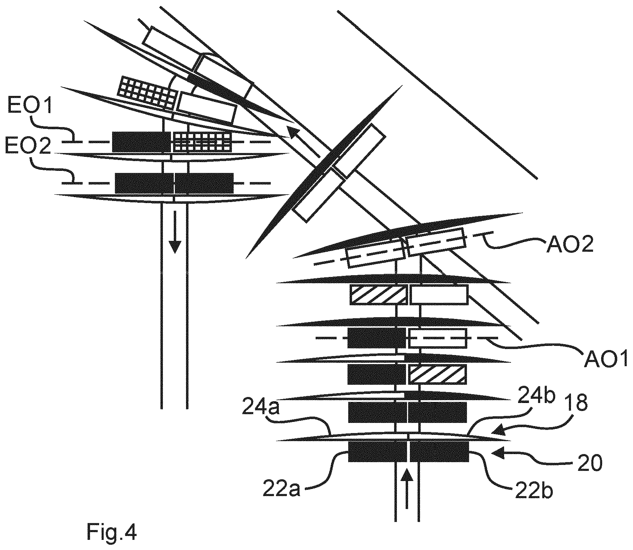

Die Steuerungseinrichtung 30 ist dazu eingerichtet, zum temporären Unterbrechen der Streugutausbringung an einem Abschaltort AO, AO2 (vgl. Fig. 3 und 4) auf der landwirtschaftlichen Nutzfläche die Fördermengeneinstelleinrichtung 18 dazu zu veranlassen, frühzeitig vor Erreichen des Abschaltorts AO, AO2 das Fördern von Streugut S in die Leerlaufstrecke 20 hinein zu verhindern, sodass die Leerlaufstrecke 20 des Förderbandes 12 bei Erreichen des Abschaltorts AO, AO2 leergelaufen ist. Ferner ist die Steuerungseinrichtung 30 dazu eingerichtet, zum Fortsetzen der Streugutausbringung an einem Einschaltort EO, EO1 (vgl. Fig. 3 und 4) auf der landwirtschaftlichen Nutzfläche die Fördermengeneinstelleinrichtung dazu zu veranlassen, frühzeitig vor Erreichen des Einschaltorts EO, EO1 das Fördern von Streugut S in die Leerlaufstrecke 20 hinein auszulösen, sodass das Förderband 12 bei Erreichen des Einschaltorts EO, EO1 entlang der gesamten Leerlaufstrecke 20 zumindest auf einer Teilbreite mit Streugut S beladen ist.

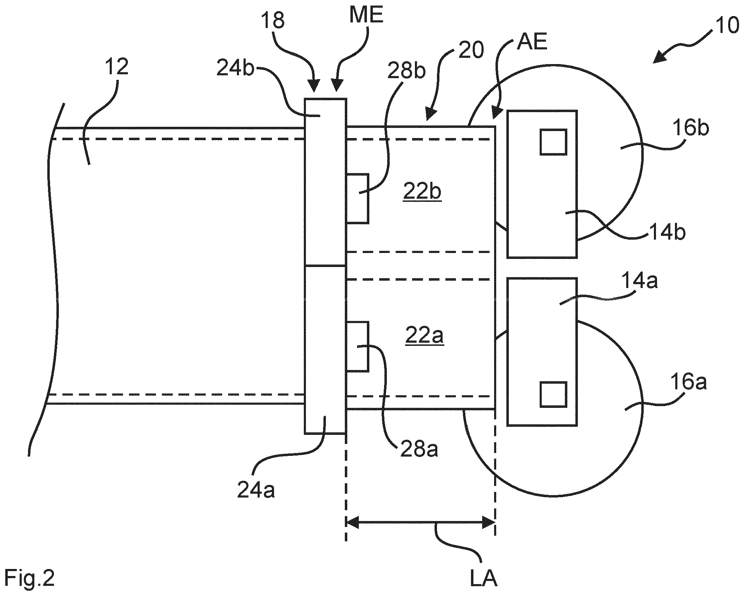

Die Fig. 2 zeigt, dass die Leerlaufstreckenteilbreiten 22a, 22b nebeneinander liegende Teilbreiten der Leerlaufstrecken 20 sind, welche sich entlang eines Längsabschnitts LA des Förderbandes 12 erstrecken. Der Längsabschnitt LA befindet sich zwischen der Mengeneinstellebene ME und der Abwurfebene AE.

Die Fig. 3 zeigt eine Vorgewendesituation, bei welcher eine Streugrenze rechtwinklig zur Fahrtrichtung der Streumaschine verläuft. Die Fig. 3 zeigt die unterschiedlichen Beladungszustände der Leerlaufstreckenteilbreiten 22a, 22b sowie die Öffnungszustände der Fördermengenbegrenzer 24a, 24b während des Durchführens eines Wendevorgangs im Vorgewende.

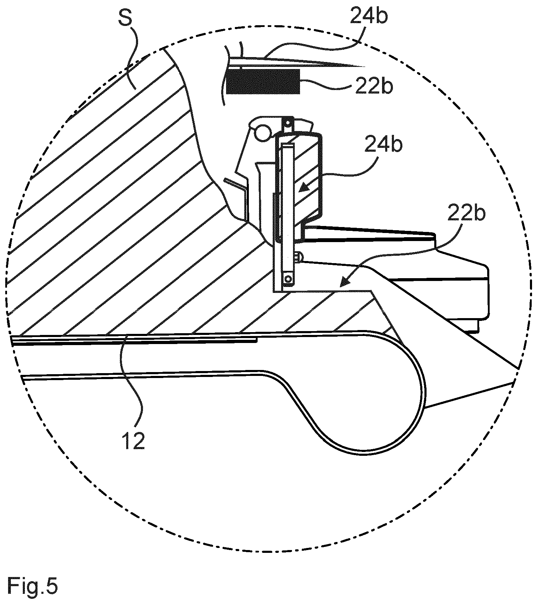

Bei der Zufahrt auf die Vorgewendefahrgasse sind die Leerlaufstreckenteilbreiten 22a, 22b zunächst durchgängig und gleichmäßig mit Streugut S beladen und die Fördermengenbegrenzer 24a, 24b befinden sich in einem geöffneten Zustand. Die Fig. 5 zeigt den Beladungszustand der Leerlaufstreckenteilbreite 22b und den Öffnungszustand des Fördermengenbegrenzers 24b im Detail.

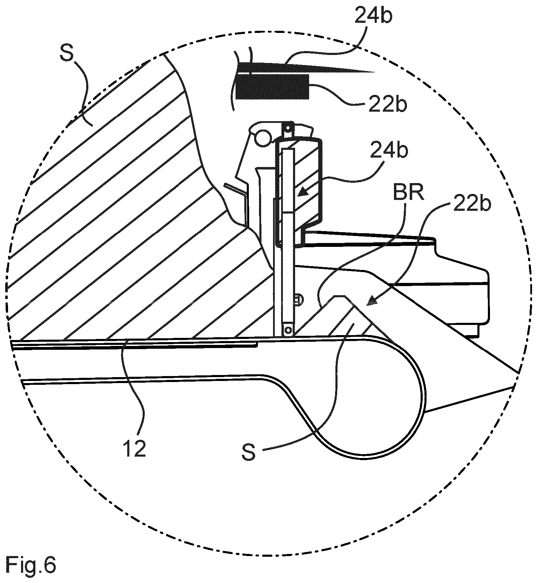

Bei Annäherung an die Vorgewendefahrgasse veranlasst die Steuerungseinrichtung 30 frühzeitig vor Erreichen eines Abschaltorts AO auf der landwirtschaftlichen Nutzfläche das Schließen der Fördermengenbegrenzer 24a, 24b. Der Schließvorgang wird von der Steuerungseinrichtung 30 zu einem Schließzeitpunkt veranlasst. Die Fig. 6 zeigt den Beladungszustand der Leerlaufstreckenteilbreite 22b und den geschlossenen Fördermengenbegrenzer 24b im Detail. Aus der Darstellung ergibt sich, dass die sich auf der Leerlaufstreckenteilbreite 22b befindende Fördermenge an Streugut S eine Beladungsrampe BR aufweist, welche sich aufgrund der Bewegung des Förderbandes 12 bei gleichzeitiger Schließbewegung des Mengenschiebers 26b des Fördermengenbegrenzers 24b ergibt.

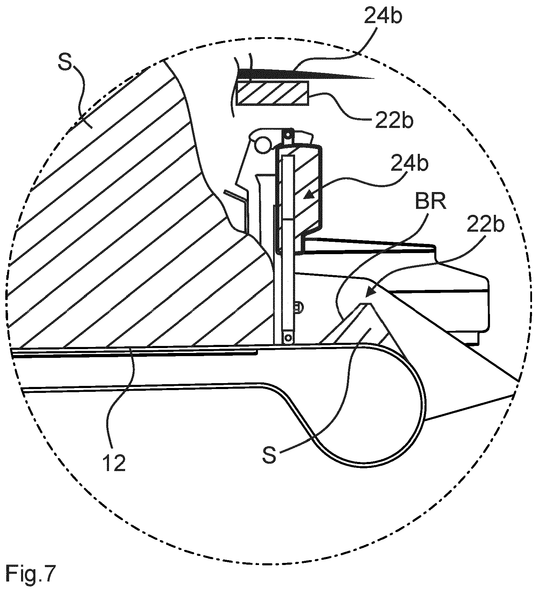

Bei weiterer Annäherung an die Vorgewendefahrgasse sind dann bereits beide Fördermengenbegrenzer 24a, 24b geschlossen, sodass das Fördern von Streugut S in die Leerlaufstreckenteilbreiten 22a, 22b hinein verhindert wird. Die Leerlaufstreckenteilbreiten 22a, 22b laufen also vor Erreichen des Abschaltorts AO synchron leer. Die Leerlaufsituation ist in der Fig. 7 im Detail dargestellt.

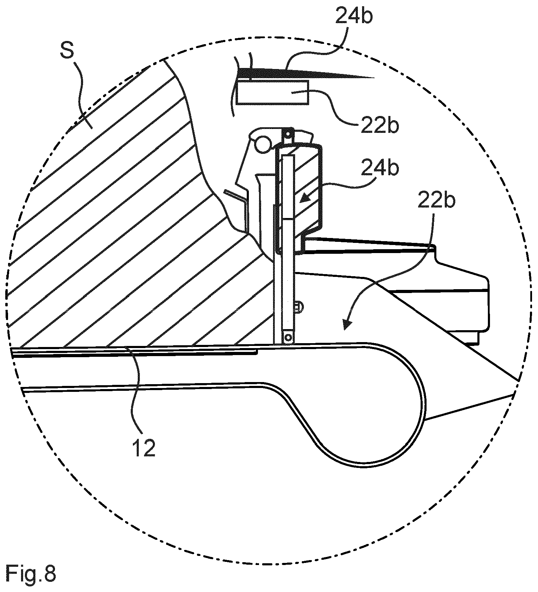

Bei Erreichen des Abschaltorts AO vor der Vorgewendefahrgasse sind beide Leerlaufstreckenteilbreiten 22a, 22b komplett leergelaufen, sodass der Wendevorgang bei unbeladener Leerlaufstrecke 20 durchgeführt wird. Die Fig. 8 zeigt die leergelaufene Leerlaufstreckenteilbreite 22b im Detail.

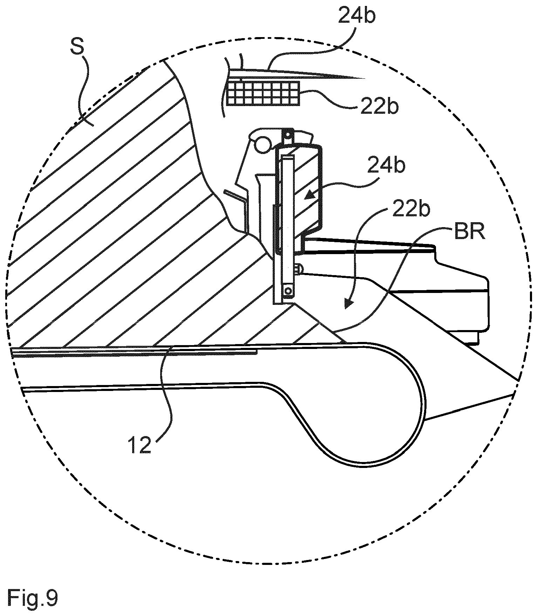

Nach Durchführung des Wendevorgangs werden die Leerlaufstreckenteilbreiten 22a, 22b durch Öffnen der Fördermengenbegrenzer 24a, 24b frühzeitig vor Erreichen des Einschaltorts EO wieder mit Streugut S beschickt. Die Fig. 9 zeigt den Befüllvorgang der Leerlaufstreckenteilbreite 22b im Detail. Aufgrund des Öffnungsvorgangs des Fördermengenbegrenzers 24b ergibt sich erneut eine Beladungsrampe BR auf der Leerlaufstreckenteilbreite 22b.

Die Steuerungseinrichtung 30 berechnet bei der Zufahrt auf das Vorgewende den Schließzeitpunkt für die Fördermengenbegrenzer 24a, 24b und bei der Ausfahrt aus dem Vorgewende den Öffnungszeitpunkt für die Fördermengenbegrenzer 24a, 24b in Abhängigkeit einer beabsichtigten Fahrgeschwindigkeit bis zum Erreichen des Abschaltorts AO bzw. des Einschaltorts EO.

Die Fig. 4 zeigt eine Ausbringsituation bei einer schräg zur Fahrtrichtung verlaufenden Streugrenze der landwirtschaftlichen Nutzfläche. In dieser Ausbringsituation laufen die Leerlaufstreckenteilbreiten 22a, 22b asynchron leer. Zunächst sind die Leerlaufstreckenteilbreiten 22a, 22b beide vollständig und gleichmäßig mit Streugut S beladen und die Fördermengenbegrenzer 24a, 24b befinden sich in einem geöffneten Zustand. Bei Annäherung an die Vorgewendefahrgasse wird zunächst der kurvenäußere Fördermengenbegrenzer 24b geschlossen, sodass die Leerlaufstreckenteilbreite 22b bei weiterer Annäherung an die Vorgewendefahrgasse leerläuft. Zeitlich versetzt wird dann der Fördermengenbegrenzer 24a auf der kurveninneren Seite geschlossen, sodass die Leerlaufstreckenteilbreite 22a bei weiterer Annäherung an die Vorgewendefahrgasse leerläuft. Die Steuerungseinrichtung 30 veranlasst das Schließen des Fördermengenbegrenzers 24b also frühzeitig vor Erreichen des Abschaltorts AO1 und das Schließen des Fördermengenbegrenzers 24b frühzeitig vor Erreichen des Abschaltorts AO2. Während des Wendevorgangs sind beide Leerlaufstreckenteilbreiten 22a, 22b dann vollständig leergelaufen.

Beim Ausfahren aus dem Vorgewende wird dann zunächst der kurvenäußere Fördermengenbegrenzer 24b geöffnet, sodass die kurvenäußere Leerlaufstreckenteilbreite 22b mit Streugut S beschickt wird. Zeitlich beabstandet wird dann der kurveninnere Fördermengenbegrenzer 24a geöffnet, sodass die kurveninnere Leerlaufstreckenteilbreite 22a mit Streugut S beschickt wird. Das Öffnen des Fördermengenbegrenzers 24b wird also frühzeitig vor Erreichen des Einschaltorts EO1 veranlasst. Das Öffnen des Fördermengenbegrenzers 24a wird frühzeitig vor Erreichen des Einschaltorts EO2 veranlasst.

Dadurch, dass in den in den Fig. 3 und 4 dargestellten Ausbringsituationen während des Wendevorgangs kein Streugut S auf der Leerlaufstrecke 20 liegt, besteht nicht die Gefahr, dass bei holpriger Fahrt Streugut S unbeabsichtigt auf die Streuscheiben 16a, 16b fällt. Ferner wird verhindert, dass bei einer beabsichtigten Fortsetzung der Streugutausbringung nach oder während eines Wendevorgangs Streugut S auf der falschen Seite der Leerlaufstrecke 20 liegt, sodass keine unbeabsichtigte lokale übermäßige Ausbringung von Streugut, beispielsweise Dünger, im kurveninneren Bereich beim Ausführen von Wendevorgängen erfolgt.

### Bezugszeichenliste

- 10: Streusystem
- 12: Förderband
- 14a, 14b: Führungskörper
- 16a, 16b: Streuscheiben
- 18: Fördermengeneinstelleinrichtung
- 20: Leerlaufstrecke
- 22a, 22b: Leerlaufstreckenteilbreiten
- 24a, 24b: Fördermengenbegrenzer
- 26a, 26b: Mengenschieber
- 28a, 28b: Schieberantriebe
- 30: Steuerungseinrichtung

- AE: Abwurfebene
- AO, AO1, AO2: Abschaltorte
- BR: Beladungsrampe
- EO, EO1, EO2: Einschaltorte
- LA: Längsabschnitt
- ME: Mengeneinstellebene
- S: Streugut

## Patentansprüche

1. Verfahren zum Steuern einer landwirtschaftlichen Streumaschine während des Ausbringens von Streugut (S) auf eine landwirtschaftliche Nutzfläche, mit dem Schritt:
- Fördern des auszubringenden Streuguts (S) mittels eines Förderbandes (12) der Streumaschine entlang einer sich auf einen Längsabschnitt (LA) des Förderbandes (12) beziehenden Leerlaufstrecke (20), wobei die Leerlaufstrecke (20) zwischen einer Mengeneinstellebene (ME), in welcher die in die Leerlaufstrecke (20) einlaufende Fördermenge an Streugut (S) mittels einer Fördermengeneinstelleinrichtung (18) der Streumaschine eingestellt wird, und einer Abwurfebene (AE), in welcher die die Leerlaufstrecke (20) verlassende Fördermenge an Streugut (S) von dem Förderband (12) in Richtung einer ersten und einer zweiten Streuscheibe (16a, 16b) abgeworfen wird, liegt,
**dadurch gekennzeichnet, dass** eine Steuerungseinrichtung (30) zum temporären Unterbrechen der Streugutausbringung an einem Abschaltort (AO, AO2) auf der landwirtschaftlichen Nutzfläche die Fördermengeneinstelleinrichtung (18) dazu veranlasst, frühzeitig vor Erreichen des Abschaltorts (AO, AO2) das Fördern von Streugut (S) in die Leerlaufstrecke (20) hinein zu verhindern, sodass die Leerlaufstrecke (20) des Förderbandes (12) bei Erreichen des Abschaltorts (AO, AO2) leergelaufen ist,
wobei die Steuerungseinrichtung (30) zu einem berechneten Schließzeitpunkt das Fördern von Streugut (S) in die Leerlaufstrecke (20) hinein verhindert,
wobei die Steuerungseinrichtung (30) zur Berechnung des Schließzeitpunkts eine aktuelle Position und/oder eine Position des Abschaltortes berücksichtigt, und
wobei zur Positionsermittlung ein Satellitennavigationssystem eingesetzt wird.

2. Verfahren nach Anspruch 1,
**dadurch gekennzeichnet, dass** die Steuerungseinrichtung (30) zum Fortsetzen der Streugutausbringung an einem Einschaltort (EO, EO1) auf der landwirtschaftlichen Nutzfläche die Fördermengeneinstelleinrichtung (18) dazu veranlasst, frühzeitig vor Erreichen des Einschaltorts (EO, EO1) das Fördern von Streugut (S) in die Leerlaufstrecke (20) hinein auszulösen, sodass das Förderband (12) bei Erreichen des Einschaltorts (EO, EO1) entlang der gesamten Leerlaufstrecke (20) zumindest auf einer Teilbreite mit Streugut (S) beladen ist.

3. Verfahren nach Anspruch 1 oder 2,
**dadurch gekennzeichnet, dass**
- das die Leerlaufstrecke (20) verlassende und sich auf einer ersten Leerlaufstreckenteilbreite (22a) befindende Streugut (S) in der Abwurfebene (AE) in Richtung einer ersten Streuscheibe (16a) der Streumaschine von dem Förderband (12) abgeworfen wird; und/oder
- das die Leerlaufstrecke (20) verlassende und sich auf einer zweiten Leerlaufstreckenteilbreite (22b) befindende Streugut (S) in der Abwurfebene (AE) in Richtung einer zweiten Streuscheibe (16b) der Streumaschine von dem Förderband (12) abgeworfen wird.

4. Verfahren nach Anspruch 3,
**dadurch gekennzeichnet, dass**
- die Fördermengeneinstelleinrichtung (18) in der Mengeneinstellebene (ME) mittels eines ersten Fördermengenbegrenzers (24a) die in die erste Leerlaufstreckenteilbreite (22a) einlaufende Fördermenge an Streugut (S) einstellt; und/oder
- die Fördermengeneinstelleinrichtung (18) in der Mengeneinstellebene (ME) mittels eines zweiten Fördermengenbegrenzers (24b) die in die zweite Leerlaufstreckenteilbreite (22b) einlaufende Fördermenge an Streugut (S) einstellt.

5. Verfahren nach Anspruch 4,
**dadurch gekennzeichnet, dass** die Steuerungseinrichtung (30) an einer rechtwinklig zur Fahrtrichtung der Streumaschine verlaufenden Streugrenze der landwirtschaftlichen Nutzfläche beim temporären Unterbrechen der Streugutausbringung an einem Abschaltort (AO) auf der landwirtschaftlichen Nutzfläche den ersten Fördermengenbegrenzer (24a) und den zweiten Fördermengenbegrenzer (24b) der Fördermengeneinstelleinrichtung (18) zu einem gemeinsamen Schließzeitpunkt gleichzeitig dazu veranlasst, frühzeitig vor Erreichen des Abschaltorts (AO) das Fördern von Streugut (S) in die erste Leerlaufstreckenteilbreite (22a) und die zweite Leerlaufstreckenteilbreite (22b) hinein zu verhindern, sodass die erste Leerlaufstreckenteilbreite (22a) und die zweite Leerlaufstreckenteilbreite (22b) vor dem Erreichen des Abschaltorts (AO) synchron leerlaufen.

6. Verfahren nach Anspruch 4 oder 5,
**dadurch gekennzeichnet, dass** die Steuerungseinrichtung (30) an einer schräg zur Fahrtrichtung der Streumaschine verlaufenden Streugrenze der landwirtschaftlichen Nutzfläche beim temporären Unterbrechen der Streugutausbringung an einem Abschaltort (AO2) auf der landwirtschaftlichen Nutzfläche den ersten Fördermengenbegrenzer (24a) der Fördermengeneinstelleinrichtung (18) zu einem ersten Schließzeitpunkt und den zweiten Fördermengenbegrenzer (24b) der Fördermengeneinstelleinrichtung (18) zu einem zweiten Schließzeitpunkt zeitversetzt voneinander dazu veranlasst, frühzeitig vor Erreichen des Abschaltorts (AO2) das Fördern von Streugut (S) in die erste Leerlaufstreckenteilbreite (22a) und die zweite Leerlaufstreckenteilbreite (22b) hinein zu verhindern, sodass die erste Leerlaufstreckenteilbreite (22a) und die zweite Leerlaufstreckenteilbreite (22b) vor dem Erreichen des Abschaltorts (AO2) asynchron leerlaufen.

7. Verfahren nach Anspruch 5 oder 6,
**dadurch gekennzeichnet, dass** die Steuerungseinrichtung (30) den gemeinsamen Schließzeitpunkt, den ersten Schließzeitpunkt und/oder den zweiten Schließzeitpunkt in Abhängigkeit einer beabsichtigten Fahrgeschwindigkeit bis zum Erreichen des Abschaltortes (AO, AO2) berechnet.

8. Verfahren nach einem der Ansprüche 4 bis 7,
**dadurch gekennzeichnet, dass** der erste Fördermengenbegrenzer (24a) und der zweite Fördermengenbegrenzer (24b) der Fördermengeneinstelleinrichtung (18) zum vollständigen Verhindern des Hineinförderns von Streugut (S) in die erste Leerlaufstreckenteilbreite (22a) und die zweite Leerlaufstreckenteilbreite (22b) jeweils einen Schließvorgang ausführen, welcher sich zeitlich über eine Schließdauer erstreckt, wobei
- die in die erste Leerlaufstreckenteilbreite (22a) einlaufende Fördermenge an Streugut (S) aufgrund des Schließvorgangs des ersten Fördermengenbegrenzers (24a) während der Schließdauer des ersten Fördermengenbegrenzers (24a) abfällt; und/oder.
- die in die zweite Leerlaufstreckenteilbreite (22b) einlaufende Fördermenge an Streugut (S) aufgrund des Schließvorgangs des zweiten Fördermengenbegrenzers (24b) während der Schließdauer des zweiten Fördermengenbegrenzers (24b) abfällt.

9. Verfahren nach Anspruch 8,
**dadurch gekennzeichnet, dass** die Steuerungseinrichtung (30) die Bandgeschwindigkeit des Förderbandes (12) während des Schließvorgangs des ersten und/oder des zweiten Fördermengenbegrenzers (24a, 24b) an die abfallende Fördermenge an Streugut (S) auf der ersten Leerlaufstreckenteilbreite (22a) und/oder der zweiten Leerlaufstreckenteilbreite (22b) anpasst.

10. Verfahren nach einem der vorstehenden Ansprüche,
**dadurch gekennzeichnet, dass** die Fördermengeneinstelleinrichtung (18) die in die Leerlaufstrecke (20) einlaufende Fördermenge an Streugut (S) durch teilweises oder vollständiges Sperren des freien Förderquerschnitts oberhalb des Förderbandes (12) einstellt.

11. Streusystem (10) zum Ausbringen von Streugut (S) auf eine landwirtschaftliche Nutzfläche, mit
- einer ersten und einer zweiten Streuscheibe (16a, 16b);
- einem Förderband (12) zum Fördern des auszubringenden Streuguts (S) entlang einer sich auf einen Längsabschnitt (LA) des Förderbandes (12) beziehenden Leerlaufstrecke (20), welche zwischen einer Mengeneinstellebene (ME) und einer Abwurfebene (AE) liegt, wobei das Förderband (12) dazu eingerichtet ist, die die Leerlaufstrecke (20) verlassende Fördermenge an Streugut (S) in der Abwurfebene (AE) in Richtung der ersten und der zweiten Streuscheibe (16a, 16b) abzuwerfen; und
- einer Fördermengeneinstelleinrichtung (18), welche dazu eingerichtet ist, in der Mengeneinstellebene (ME) die in die Leerlaufstrecke (20) einlaufende Fördermenge an Streugut (S) einzustellen,
**gekennzeichnet durch** eine Steuerungseinrichtung (30), welche dazu eingerichtet ist, zum temporären Unterbrechen der Streugutausbringung an einem Abschaltort (AO, AO2) auf der landwirtschaftlichen Nutzfläche die Fördermengeneinstelleinrichtung (18) dazu zu veranlassen, frühzeitig vor Erreichen des Abschaltorts (AO, AO2) das Fördern von Streugut (S) in die Leerlaufstrecke (20) hinein zu verhindern, sodass die Leerlaufstrecke (20) des Förderbandes (12) bei Erreichen des Abschaltorts (AO, AO2) leergelaufen ist,
wobei die Steuerungseinrichtung (30) ferner dazu eingerichtet ist, zu einem berechneten Schließzeitpunkt das Förderr von Streugut (S) in die Leerlaufstrecke (20) hinein zu verhindern und zur Berechnung des Schließzeitpunkts eine aktuelle Position und/oder eine Position des Abschaltortes zu berücksichtigen, wobei zur Positionsermittlung ein Satellitennavigationssystem eingesetzt wird.

12. Streusystem (10) nach Anspruch 11,
**dadurch gekennzeichnet, dass** das Streusystem (10) dazu eingerichtet ist, das Verfahren zum Steuern einer landwirtschaftlichen Streumaschine während des Ausbringens von Streugut (S) auf eine landwirtschaftliche Nutzfläche nach einem der Ansprüche 1 bis 10 auszuführen.

## Claims

1. Method for controlling an agricultural spreading machine during the dispensing of spreading material (S) onto an agriculturally useful area, comprising the step of:
- a conveyor belt (12) of the spreading machine conveying, along an empty-running stretch (20), the spreading material (S) to be dispensed, the empty-running stretch (20) relating to a longitudinal portion (LA) of the conveyor belt (12) and being located between a quantity adjustment plane (ME), in which the conveying quantity of spreading material (S) entering the empty-running stretch (20) is adjusted by means of a conveying quantity adjusting device (18) of the spreading machine, and a discharge plane (AE), in which the conveying quantity of spreading material (S) leaving the empty-running stretch (20) is discharged from the conveyor belt (12) toward a first and a second spreading disk (16a, 16b),
**characterized in that,** in order to temporarily interrupt the dispensing of spreading material at a switch-off location (AO, AO2) in the agriculturally useful area, a control device (30) causes the conveying quantity adjusting device (18) to prevent, at an early time before the switch-off location (AO, AO2) has been reached, the conveying of spreading material (S) into the empty-running stretch (20), with the result that the empty-running stretch (20) of the conveyor belt (12) has run until it has emptied itself by the time the switch-off location (AO, AO2) has been reached,
the control device (30) preventing the conveying of spreading material (S) into the empty-running stretch (20) at a calculated closure time,
the control device (30) taking into account a current position and/or a position of the switch-off location in order to calculate the closure time, and
a satellite navigation system being used to determine the position.

2. Method according to claim 1,
**characterized in that,** in order to resume the dispensing of spreading material at a switch-on location (EO, EO1) in the agriculturally useful area, the control device (30) causes the conveying quantity adjusting device (18) to trigger, at an early time before the switch-on location (EO, EO1) has been reached, the conveying of spreading material (S) into the empty-running stretch (20), with the result that the conveyor belt (12) has been loaded with spreading material (S) at least over a partial width along the entire empty-running stretch (20) by the time the switch-on location (EO, EO1) has been reached.

3. Method according to claim 1 or 2,
**characterized in that**
- the spreading material (S) leaving the empty-running stretch (20) and located on a first empty-running stretch partial width (22a) is discharged, in the discharge plane (AE), from the conveyor belt (12) toward a first spreading disk (16a) of the spreading machine; and/or
- the spreading material (S) leaving the empty-running stretch (20) and located on a second empty-running stretch partial width (22b) is discharged, in the discharge plane (AE), from the conveyor belt (12) toward a second spreading disk (16b) of the spreading machine.

4. Method according to claim 3,
**characterized in that**
- in the quantity adjustment plane (ME), the conveying quantity adjusting device (18) adjusts the conveying quantity of spreading material (S) entering the first empty-running stretch partial width (22a) by means of a first conveying quantity limiter (24a); and/or
- in the quantity adjustment plane (ME), the conveying quantity adjusting device (18) adjusts the conveying quantity of spreading material (S) entering the second empty-running stretch partial width (22b) by means of a second conveying quantity limiter (24b).

5. Method according to claim 4,
**characterized in that,** at a spreading boundary of the agriculturally useful area running perpendicularly to the direction of travel of the spreading machine, the control device (30), on temporarily interrupting the dispensing of spreading material at a switch-off location (AO) in the agriculturally useful area, causes the first conveying quantity limiter (24a) and the second conveying quantity limiter (24b) of the conveying quantity adjusting device (18) simultaneously at a common closure time to prevent, at an early time before the switch-off location (AO) has been reached, the conveying of spreading material (S) into the first empty-running stretch partial width (22a) and the second empty-running stretch partial width (22b), with the result that the first empty-running stretch partial width (22a) and the second empty-running stretch partial width (22b) run synchronously until they have emptied themselves before the switch-off location (AO) has been reached.

6. Method according to claim 4 or 5,
**characterized in that,** at a spreading boundary of the agriculturally useful area running obliquely to the direction of travel of the spreading machine, the control device (30), on temporarily interrupting the dispensing of spreading material at a switch-off location (AO2) in the agriculturally useful area, causes the first conveying quantity limiter (24a) of the conveying quantity adjusting device (18) and the second conveying quantity limiter (24b) of the conveying quantity adjusting device (18), respectively at a first closure time and at a second closure time that are temporally offset from one another, to prevent, at an early time before the switch-off location (AO2) has been reached, the conveying of spreading material (S) into the first empty-running stretch partial width (22a) and the second empty-running stretch partial width (22b), with the result that the first empty-running stretch partial width (22a) and the second empty-running stretch partial width (22b) run asynchronously until they have emptied themselves before the switch-off location (AO2) has been reached.

7. Method according to claim 5 or 6,
**characterized in that** the control device (30) calculates the common closure time, the first closure time and/or the second closure time on the basis of an intended travel speed until the switch-off location (AO, AO2) has been reached.

8. Method according to any of claims 4 to 7,
**characterized in that** the first conveying quantity limiter (24a) and the second conveying quantity limiter (24b) of the conveying quantity adjusting device (18) each perform a closure process to completely prevent the conveying of spreading material (S) into the first empty-running stretch partial width (22a) and the second empty-running stretch partial width (22b), which process lasts for a closure duration,
- the conveying quantity of spreading material (S) entering the first empty-running stretch partial width (22a) decreasing during the closure duration of the first conveying quantity limiter (24a) due to the closure process of the first conveying quantity limiter (24a); and/or
- the conveying quantity of spreading material (S) entering the second empty-running stretch partial width (22b) decreasing during the closure duration of the second conveying quantity limiter (24b) due to the closure process of the second conveying quantity limiter (24b).

9. Method according to claim 8,
**characterized in that** the control device (30) matches the belt speed of the conveyor belt (12) during the closure process of the first and/or the second conveying quantity limiter (24a, 24b) to the decreasing conveying quantity of spreading material (S) on the first empty-running stretch partial width (22a) and/or the second empty-running stretch partial width (22b).

10. Method according to any of the preceding claims,
**characterized in that** the conveying quantity adjusting device (18) adjusts the conveying quantity of spreading material (S) entering the empty-running stretch (20) by partially or completely blocking the free conveying cross section above the conveyor belt (12).

11. Spreading system (10) for dispensing spreading material (S) onto an agriculturally useful area, comprising
- a first and a second spreading disk (16a, 16b);
- a conveyor belt (12) for conveying, along an empty-running stretch (20), the spreading material (S) to be dispensed, which empty-running stretch relates to a longitudinal portion (LA) of the conveyor belt (12) and is located between a quantity adjustment plane (ME) and a discharge plane (AE), the conveyor belt (12) being configured to discharge, in the discharge plane (AE), the conveying quantity of spreading material (S) leaving the empty-running stretch (20) toward the first and the second spreading disk (16a, 16b); and
- a conveying quantity adjusting device (18) which is configured to adjust, in the quantity adjustment plane (ME), the conveying quantity of spreading material (S) entering the empty-running stretch (20),
**characterized by** a control device (30) which, in order to temporarily interrupt the dispensing of spreading material at a switch-off location (AO, AO2) in the agriculturally useful area, is configured to cause the conveying quantity adjusting device (18) to prevent, at an early time before the switch-off location (AO, AO2) has been reached, the conveying of spreading material (S) into the empty-running stretch (20), with the result that the empty-running stretch (20) of the conveyor belt (12) has run until it has emptied itself by the time the switch-off location (AO, AO2) has been reached, the control device (30) further being configured
to prevent the conveying of spreading material (S) into the empty-running stretch (20) at a calculated closure time and to take into account a current position and/or a position of the switch-off location in order to calculate the closure time, a satellite navigation system being used to determine the position.

12. Spreading system (10) according to claim 11,
**characterized in that** the spreading system (10) is configured to perform the method for controlling an agricultural spreading machine during the dispensing of spreading material (S) onto an agriculturally useful area according to any of claims 1 to 10.

## Revendications

1. Procédé permettant la commande d'une machine d'épandage agricole pendant la distribution de produit à épandre (S) sur une surface agricole utile, comportant l'étape consistant à :
- transporter le produit à épandre (S) à distribuer à l'aide d'une bande transporteuse (12) de la machine d'épandage le long d'un circuit de ralenti (20) se rapportant à une section longitudinale (LA) de la bande transporteuse (12), dans lequel le circuit de ralenti (20) est situé entre un plan de réglage de débit (ME), plan dans lequel le débit de produit à épandre (S) entrant dans le circuit de ralenti (20) est réglé à l'aide d'un dispositif de réglage de débit (18) de la machine d'épandage, et un plan d'éjection (AE) dans lequel plan le débit de produit à épandre (S) quittant le circuit de ralenti (20) est éjecté de la bande transporteuse (12) en direction d'un premier et d'un second disque d'épandage (16a, 16b),
**caractérisé en ce qu'un** dispositif de commande (30) pour l'interruption temporaire de la distribution de produit à épandre à un lieu d'arrêt (AO, AO2) sur la surface agricole utile amène le dispositif de réglage de débit (18) à empêcher le transport de produit à épandre (S) dans le circuit de ralenti (20) suffisamment tôt avant que le lieu d'arrêt (AO, AO2) ne soit atteint, de sorte que le circuit de ralenti (20) de la bande transporteuse (12) est vidé lorsque le lieu d'arrêt (AO, AO2) est atteint,
dans lequel le dispositif de commande (30) empêche, à un moment de fermeture calculé, le transport de produit à épandre (S) dans le circuit de ralenti (20),
dans lequel le dispositif de commande (30) tient compte, pour le calcul du moment de fermeture, d'une position actuelle et/ou d'une position du lieu d'arrêt, et
dans lequel un système de navigation par satellite est utilisé pour la détermination de la position.

2. Procédé selon la revendication 1,
**caractérisé en ce que** le dispositif de commande (30), pour poursuivre la distribution de produit à épandre en un lieu de mise en marche (EO, EO1) sur la surface agricole utile, amène le dispositif de réglage de débit (18) à déclencher le transport de produit à épandre (S) dans le circuit de ralenti (20) suffisamment tôt avant que le lieu de mise en marche (EO, EO1) ne soit atteint, de sorte que la bande transporteuse (12) est chargée de produit à épandre (S) sur tout le circuit de ralenti (20) au moins sur une largeur partielle lorsque le lieu de mise en marche (EO, EO1) est atteint.

3. Procédé selon la revendication 1 ou 2,
**caractérisé en ce que**
- le produit à épandre (S) quittant le circuit de ralenti (20) et se trouvant sur une première largeur partielle de circuit de ralenti (22a) est éjecté de la bande transporteuse (12) dans le plan d'éjection (AE) en direction d'un premier disque d'épandage (16a) de la machine d'épandage ; et/ou
- le produit à épandre (S) quittant le circuit de ralenti (20) et se trouvant sur une seconde largeur partielle de circuit de ralenti (22b) est éjecté de la bande transporteuse (12) dans le plan d'éjection (AE) en direction d'un second disque d'épandage (16b) de la machine d'épandage.

4. Procédé selon la revendication 3,
**caractérisé en ce que**
- le dispositif de réglage de débit (18) règle, dans le plan de réglage de débit (ME) et à l'aide d'un premier limiteur de débit (24a), le débit de produit à épandre (S) entrant dans la première largeur partielle de circuit de ralenti (22a) ; et/ou
- le dispositif de réglage de débit (18) règle, dans le plan de réglage de débit (ME) et à l'aide d'un second limiteur de débit (24b), le débit de produit à épandre (S) entrant dans la seconde largeur partielle de circuit de ralenti (22b).

5. Procédé selon la revendication 4,
**caractérisé en ce que** le dispositif de commande (30), à une limite d'épandage de la surface agricole utile s'étendant perpendiculairement au sens de déplacement de la machine d'épandage, lors de l'interruption temporaire de la distribution de produit à épandre à un point d'arrêt (AO) sur la surface agricole utile, amène le premier limiteur de débit (24a) et le second limiteur de débit (24b) du dispositif de réglage de débit (18) à empêcher, simultanément à un moment de fermeture commun et suffisamment tôt avant que le point d'arrêt (AO) ne soit atteint, le transport de produit à épandre (S) dans la première largeur partielle de circuit de ralenti (22a) et la seconde largeur partielle de circuit de ralenti (22b), de sorte que la première largeur partielle de circuit de ralenti (22a) et la seconde largeur partielle de circuit de ralenti (22b) se vident de manière synchrone avant que le point d'arrêt (AO) ne soit atteint.

6. Procédé selon la revendication 4 ou 5,
**caractérisé en ce que** le dispositif de commande (30), à une limite d'épandage de la surface agricole utile s'étendant obliquement par rapport au sens de déplacement de la machine d'épandage, lors de l'interruption temporaire de la distribution de produit à épandre à un point d'arrêt (AO2) sur la surface agricole utile, amène le premier limiteur de débit (24a) du dispositif de réglage de débit (18) à un premier moment de fermeture et le second limiteur de débit (24b) du dispositif de réglage de débit (18) à un second moment de fermeture, de manière décalée dans le temps l'un par rapport à l'autre, à empêcher, suffisamment tôt avant que le point d'arrêt (AO2) ne soit atteint, le transport de produit à épandre (S) dans la première largeur partielle de circuit de ralenti (22a) et la seconde largeur partielle de circuit de ralenti (22b), de sorte que la première largeur partielle de circuit de ralenti (22a) et la seconde largeur partielle de circuit de ralenti (22b) se vident de manière asynchrone avant que le point d'arrêt (AO2) ne soit atteint.

7. Procédé selon la revendication 5 ou 6,
**caractérisé en ce que** le dispositif de commande (30) calcule le moment de fermeture commun, le premier moment de fermeture et/ou le second moment de fermeture en fonction d'une vitesse de déplacement prévue jusqu'à ce que le lieu d'arrêt (AO, AO2) soit atteint.

8. Procédé selon l'une des revendications 4 à 7,
**caractérisé en ce que** le premier limiteur de débit (24a) et le second limiteur de débit (24b) du dispositif de réglage de débit (18) exécutent respectivement un processus de fermeture, qui s'étend dans le temps sur une durée de fermeture, pour empêcher complètement l'introduction de produit à épandre (S) dans la première largeur partielle de circuit de ralenti (22a) et dans la seconde largeur partielle de circuit de ralenti (22b), dans lequel
- le débit de produit à épandre (S) entrant dans la première largeur partielle de circuit de ralenti (22a) diminue en raison du processus de fermeture du premier limiteur de débit (24a) pendant la durée de fermeture du premier limiteur de débit (24a) ; et/ou.
- le débit de produit à épandre (S) entrant dans la seconde largeur partielle de circuit de ralenti (22b) diminue en raison du processus de fermeture du second limiteur de débit (24b) pendant la durée de fermeture du second limiteur de débit (24b).

9. Procédé selon la revendication 8,
**caractérisé en ce que** le dispositif de commande (30) adapte la vitesse de bande de la bande transporteuse (12) pendant le processus de fermeture du premier et/ou du second limiteur de débit (24a, 24b) au débit décroissant de produit à épandre (S) sur la première largeur partielle de circuit de ralenti (22a) et/ou la seconde largeur partielle de circuit de ralenti (22b).

10. Procédé selon l'une des revendications précédentes,
**caractérisé en ce que** le dispositif de réglage de débit (18) règle le débit de produit à épandre (S) entrant dans le circuit de ralenti (20) en bloquant partiellement ou totalement la section transversale de transport libre au-dessus de la bande transporteuse (12).

11. Système d'épandage (10) pour la distribution de produit à épandre (S) sur une surface agricole utile, comportant
- un premier et un second disque d'épandage (16a, 16b) ;
- une bande transporteuse (12) pour le transport du produit à épandre (S) à distribuer le long d'un circuit de ralenti (20) se rapportant à une section longitudinale (LA) de la bande transporteuse (12), lequel circuit de ralenti se situe entre un plan de réglage de débit (ME) et un plan d'éjection (AE), dans lequel la bande transporteuse (12) est conçue pour éjecter le débit de produit à épandre (S) quittant le circuit de ralenti (20) dans le plan d'éjection (AE) en direction du premier et du second disque d'épandage (16a, 16b) ; et
- un dispositif de réglage de débit (18), qui est conçu pour régler, dans le plan de réglage de débit (ME), le débit de produit à épandre (S) entrant dans le circuit de ralenti (20),
**caractérisé par** un dispositif de commande (30) qui est conçu pour amener le dispositif de réglage de débit (18), pour l'interruption temporaire de la distribution de produit à épandre à un point d'arrêt (AO, AO2) sur la surface agricole utile, à empêcher suffisamment tôt, avant que le lieu d'arrêt (AO, AO2) ne soit atteint, le transport de produit à épandre (S) dans le circuit de ralenti (20), de sorte que le circuit de ralenti (20) de la bande transporteuse (12) est vidé lorsque le lieu d'arrêt (AO, AO2) est atteint,
dans lequel le dispositif de commande (30) est en outre conçu pour empêcher, à un moment de fermeture calculé, le transport de produit à épandre (S) dans le circuit de ralenti (20) et pour prendre en compte, pour le calcul du moment de fermeture, une position actuelle et/ou une position du lieu d'arrêt,
dans lequel un système de navigation par satellite est utilisé pour la détermination de position.

12. Système d'épandage (10) selon la revendication 11,
**caractérisé en ce que** le système d'épandage (10) est conçu pour mettre en œuvre le procédé pour la commande d'une machine d'épandage agricole pendant la distribution de produit à épandre (S) sur une surface agricole utile selon l'une des revendications 1 à 10.
